# DEMANDE DE BREVET EUROPEEN

(11) **EP 0 607 721 A1**
(43) Date de publication de la demande: **27.07.1994**
(21) Numéro de dépôt: 93403123.8
(22) Date de dépôt: 21.12.1993
(51) Int. Cl.: B64C 25/34

(54) **Train d'atterrissage relevable pour avion gros porteur**

(30) Priorité: 28.12.1992 FR 9215784
(71) Demandeur: MESSIER BUGATTI, F-78140 Velizy Villacoublay (FR)
(72) Inventeur: Derrien, Michel, F-78000 Versailles (FR); Brisedou, Philippe, F-94260 Fresnes (FR)
(74) Mandataire: Jaunez, Xavier

(57) **Abrégé**

L'invention concerne un train d'atterrissage relevable, comportant un atterrisseur constitué d'un caisson d'amortisseur, et d'une tige coulissante en extrémité de laquelle est articulée une poutre principale équipée de plusieurs paires de roues.

Conformément à l'invention, la poutre principale (130) de cet atterrisseur (100) est agencée transversalement, en pouvant pivoter autour d'un axe central d'articulation (131), et supporte à chacune de ses extrémités une poutre longitudinale articulée (110) qui est équipée à chaque extrémité d'une paire de roues en diabolo de façon à constituer un bogie basculant à quatre roues, cette poutre longitudinale (110) étant en outre reliée au caisson d'amortisseur (101) par un moyen latéral de stabilisation associé (150) agencé longitudinalement. De préférence, cet atterrisseur est un atterrisseur de fuselage, et il est complété par un atterrisseur relevable de voilure agencé latéralement par rapport audit atterrisseur de fuselage.

## Description

L'invention concerne les trains d'atterrissage relevables pour avions, en particulier pour les avions gros porteurs, du type comportant un atterrisseur constitué d'un caisson d'amortisseur équipé d'un axe d'articulation à une structure d'avion, et d'une tige d'amortisseur coulissant dans ledit caisson en extrémité de laquelle est articulée une poutre principale équipée de plusieurs paires de roues.

Dans le cas des gros porteurs, c'est-à-dire d'avions dont le poids dépasse largement 400 tonnes, il est nécessaire de prévoir un nombre de roues élevé pour supporter la charge concernée.

On avait déjà proposé d'organiser les atterrisseurs principaux d'un gros porteur selon deux trains de fuselage disposés de part et d'autre du plan longitudinal médian de l'avion, chaque train comportant sept jambes indépendantes équipées chacune d'une paire de roues en diabolo (ce qui donne 28 roues), les diabolos d'un train étant alignés les uns derrière les autres en position train bas, avec en sus deux atterrisseurs avant. Un tel agencement induit un encombrement longitudinal considérable, et pénalise la manoeuvrabilité de l'avion lors du roulage sur piste, ce qui nécessite de prévoir un système d'orientation associé qui a pour effet d'augmenter encore le poids et le coût de fabrication.

Ceci explique pourquoi on s'oriente maintenant vers des trains du type cité en premier lieu, avec une poutre principale articulée qui est équipée de plusieurs paires de roues.

On a ainsi récemment proposé des trains d'atterrissage de ce type, avec une poutre principale agencée longitudinalement (c'est-à-dire parallèlement au plan longitudinal médian de l'avion), cette poutre supportant, à chacune de ses extrémités, un bogie à quatre roues.

Le document EP-A-0 492 685 décrit un tel train d'atterrissage, dont chacun des deux bogies peut osciller autour d'un axe qui est parallèle à l'axe d'articulation de la poutre principale, de sorte que chaque train comporte quatre paires de roues disposées les unes derrière les autres. Les documents EP-A-0 492 687 et EP-A-0 492 688 décrivent des trains d'atterrissage analogues, dans lesquels certains au moins des essieux sont montés en pouvant pivoter par rapport au châssis de leur bogie autour d'un axe longitudinal, de façon à permettre une plus grande adaptabilité aux irrégularités du sol (les bogies permettaient en effet déjà, par leur mobilité longitudinale, de s'adapter aux creux et aux bosses, et la mobilité transversale des essieux complète encore cette adaptabilité).

Les trains d'atterrissage du type précité ont pour principal inconvénient d'être très longs (environ six à sept mètres), ce qui pénalise lourdement la manoeuvrabilité de l'avion en virage, lors du roulage sur piste. On pourrait tenter de pallier cet inconvénient en ajoutant des systèmes d'orientation, mais ceci entraînerait une augmentation sensible du poids et du coût de fabrication. Par suite aussi, le logement nécessaire pour recevoir le train d'atterrissage en position train haut est nécessairement long, ce qui oblige en général à prévoir un renforcement de la structure de l'avion.

L'arrière-plan technologique de l'invention est également illustré par les documents EP-A-0 361 549, US-A-3 643 898, US-A-3 096 051 et FR-A-898 049.

L'invention a pour objet de réaliser un train d'atterrissage ne présentant pas les inconvénients et/ou limitations précités, et en particulier un train dont la structure est compatible avec un logement de réception très compact, et permet d'être performant pour la manoeuvrabilité de l'avion sur piste et la tolérance aux irrégularité du sol.

L'invention a également pour objet de réaliser un train d'atterrissage dont la structure et l'agencement permettent d'être performant pour la stabi lité latérale et la répartition de la charge sur les roues qui l'équipent.

Il s'agit plus particulièrement d'un train d'atterrissage relevable, comportant un atterrisseur constitué d'un caisson d'amortisseur équipé d'un axe d'articulation à une structure d'avion, et d'une tige d'amortisseur coulissant dans ledit caisson en extrémité de laquelle est articulée une poutre principale équipée de plusieurs paires de roues, caractérisé en ce que la poutre principale est agencée transversalement, en pouvant pivoter autour d'un axe central d'articulation qui définit avec l'axe de la tige coulissante un plan qui, au moins en position train bas, est parallèle à un plan longitudinal médian de l'avion, et supporte à chacune de ses extrémités une poutre longitudinale articulée montée pour pivoter autour d'un axe respectif qui est perpendiculaire au plan médian précité, chaque poutre longitudinale étant équipée à chaque extrémité d'une paire de roues de façon à constituer un bogie basculant à quatre roues, et étant reliée au caisson d'amortisseur par un moyen de stabilisation associé qui est agencé longitudinalement.

De préférence, l'axe central d'articulation de la poutre principale est surbaissé par rapport aux axes d'articulation des poutres longitudinales associées. Ceci permet notamment de minimiser la surcharge des roues extérieures lors d'un virage de l'avion au sol.

Avantageusement encore, les deux moyens longitudinaux de stabilisation présentent des structures identiques, et sont agencés symétriquement de part et d'autre du plan défini par l'axe central d'articulation de la poutre principale et l'axe de la tige coulissante.

Selon un mode d'exécution possible, le moyen longitudinal de stabilisation associé à chaque poutre longitudinale est constitué par un système articulé comportant une bielle articulée sur le caisson d'amortisseur, un panneau articulé sur ladite bielle et sur la poutre longitudinale associée, et un amortisseur de tangage également articulé sur cette bielle et articulé audit caisson par une liaison à rotule.

De préférence alors, avec un atterrisseur qui comporte en outre un compas à deux bras articulés reliant le caisson d'amortisseur à la tige coulissante de celui-ci, les deux bielles faisant partie des systèmes articulés sont montées pour tourner autour d'un axe commun qui est coaxial à l'axe d'articulation par lequel le bras supérieur du compas est articulé audit caisson. En particulier, il est intéressant que chaque système articulé soit agencé de telle façon qu'en position détendue de l'amortisseur associé, les différentes articulations de ce système sont disposées en alignement en vue frontale.

Selon un autre mode d'exécution possible, le moyen longitudinal de stabilisation associé à chaque poutre longitudinale est constitué par un amortisseur de tangage reliant directement le caisson à la poutre longitudinale associée.

Il sera par ailleurs intéressant de prévoir que le train d'atterrissage comporte en outre au moins un amortisseur de roulis reliant la tige coulissante d'amortisseur à la poutre principale, par exemple par l'une ou l'autre des chapes d'extrémité de la poutre principale associées à l'articulation des poutres longitudinales.

Avantageusement encore, l'axe d'articulation du caisson d'amortisseur à la structure d'avion est perpendiculaire au plan longitudinal médian de l'avion, et cet axe est agencé en partie basse du logement de réception dudit train, de telle façon que le relevage s'effectue longitudinalement vers l'avant.

Conformément à une autre caractéristique qui est particulièrement intéressante pour les très gros porteurs, l'atterrisseur précité est agencé pour être un atterrisseur de fuselage, et cet atterrisseur est complété par un atterrisseur relevable de voilure agencé latéralement par rapport audit atterrisseur de fuselage.

De préférence alors, l'atterrisseur latéral de voilure comporte un caisson d'amortisseur monté pour pivoter dans un plan transversal perpendiculaire au plan médian de l'avion, de telle façon que le relevage de cet atterrisseur s'effectue transversalement vers l'atterrisseur de fuselage associé. En particulier, le plan transversal précité passe par l'axe de la tige coulissante de l'atterrisseur de fuselage lorsque celui-ci est en position train bas.

Enfin, pour que la compacité du logement de réception soit préservée, il est avantageux de prévoir que l'atterrisseur latéral de voilure est équipé d'une unique paire de roues, et que l'essieu de ces roues est calé sur le plan transversal précité.

D'autres caractéristiques et avantages de l'invention apparaîtront plus clairement à la lumière de la description qui va suivre et des dessins annexés, concernant un mode de réalisation particulier, en référence aux figures où :
- la figure 1 est une demi-vue frontale illustrant un train d'atterrissage conforme à l'invention (en position train bas), constitué ici par un train de fuselage à relevage longitudinal, qui est complété par un train latéral de voilure à relevage transversal (ce dernier train pouvant être quant à lui de conception traditionnelle) ;
- la figure 2 est une vue partielle en élévation du train de fuselage précité, permettant de distinguer le logement de réception associé (la position train haut est illustrée en traits mixtes, avec aussi les deux roues du train latéral de voilure) ;
- la figure 3 est une demi-vue partielle illustrant (en vue de dessus) la disposition des roues des atterrisseurs de fuselage et de voilure en position train bas ;
- la figure 4 est une vue frontale d'un train d'atterrissage de fuselage conforme à l'invention (dont les huit roues ne sont schématisées que par leurs essieux), cette vue illustrant un exemple de moyen longitudinal de stabilisation associé à l'une des deux poutres longitudinales (l'autre moyen, agencé symétriquement par rapport au premier, étant ici seulement schématisé par des traits mixtes) ;
- la figure 5 est une vue latérale du train illustré à la figure 4 ;
- la figure 6 est une vue latérale d'une variante dans laquelle le moyen longitudinal de stabilisation qui est associé à chaque poutre longitudinale est constitué par un amortisseur de tangage reliant directement cette poutre au caisson d'amortisseur.

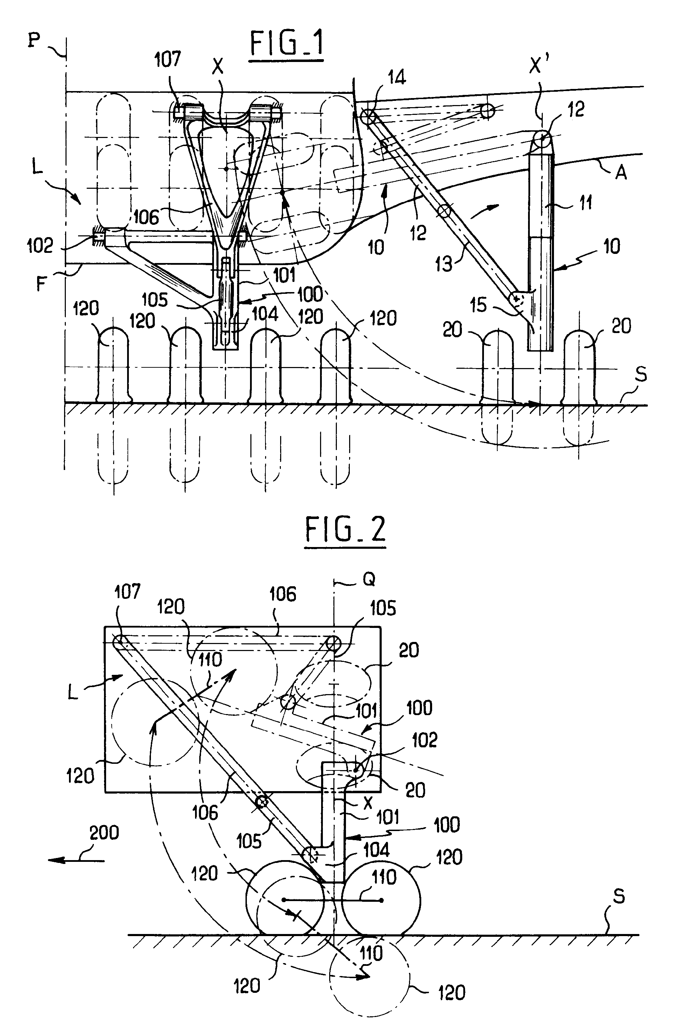

La figure 1 permet de distinguer, d'un côté d'un plan longitudinal médian (vertical) P d'un avion, un train d'atterrissage comportant un atterrisseur 100 associé au fuselage F de l'avion, ainsi qu'un atterrisseur latéral de voilure 10 à relevage transversal associé à l'aile A de l'avion. L'atterrisseur ou train de voilure 10 prévu ici complète ainsi l'atterrisseur ou train de fuselage 100, en procurant deux roues supplémentaires, le même agencement se retrouvant naturellement par symétrie de l'autre côté du plan P précité. Le train latéral de voilure 10 illustré ici est un train à relevage transversal de conception traditionnelle, avec un caisson 11 articulé en 12 sur la structure de l'aile A de l'avion, et une tige d'amortisseur (non représentée ici) coulissant dans ledit caisson et équipée de roues 20 sur le nombre et la disposition desquelles il sera ultérieurement revenu. Une contrefiche briseuse est associée à ce train de voilure 10, avec un bras supérieur 12 articulé en 14 sur la structure d'avion, et un bras inférieur 13 articulé sur un appendice 15 du caisson 11 de ce train de voilure. Le caisson d'amortisseur 11 est ainsi monté pour pivoter dans un plan transversal perpendiculaire au plan P précité, de telle façon que le relevage de cet atterrisseur s'effectue transversalement vers l'atterrisseur de fuselage associé.

Ainsi que cela est visible sur les figures 1 et 2, l'atterrisseur de fuselage 100 comporte un caisson d'amortisseur 101 équipé d'un axe d'articulation 102 à une structure d'avion, ainsi qu'une tige d'amortisseur (non représentée sur ces figures) coulissant dans ledit caisson et en extrémité de laquelle est articulée une poutre principale équipée de plusieurs paires de roues (quatre des huit roues concernées 120 sont visibles sur la figure 1). L'axe d'articulation 102 du caisson d'amortisseur 101 est ici perpendiculaire au plan longitudinal médian P, et cet axe est agencé en partie basse du logement de réception L du train d'atterrissage 100, et en partie arrière dudit logement, de telle façon que le relevage s'effectue longitudinalement vers l'avant (sur la figure 2, la direction de l'avant est repérée par la flèche 200). On distingue sur les figures 1 et 2 une contrefiche associée au caisson d'amortisseur 101, avec un bras inférieur 105 articulé sur un appendice 104 dudit caisson, et un panneau supérieur 106 articulé selon un axe 107 à la structure d'avion. Ainsi que cela est figuré en traits mixtes sur la figure 2, la position train haut dans laquelle le train de fuselage est logé dans son logement L est extrêmement compacte. La structure du train d'atterrissage selon l'invention, qui va faire l'objet d'une description plus détaillée de ses composants, permet ainsi d'avoir de chaque côté un train de fuselage court qui peut être logé, en position train haut, dans un logement de longueur minimale. Ceci permet donc d'avoir un logement L particulièrement compact, et le faible volume de ce logement permet naturellement d'augmenter d'autant le volume de soute disponible.

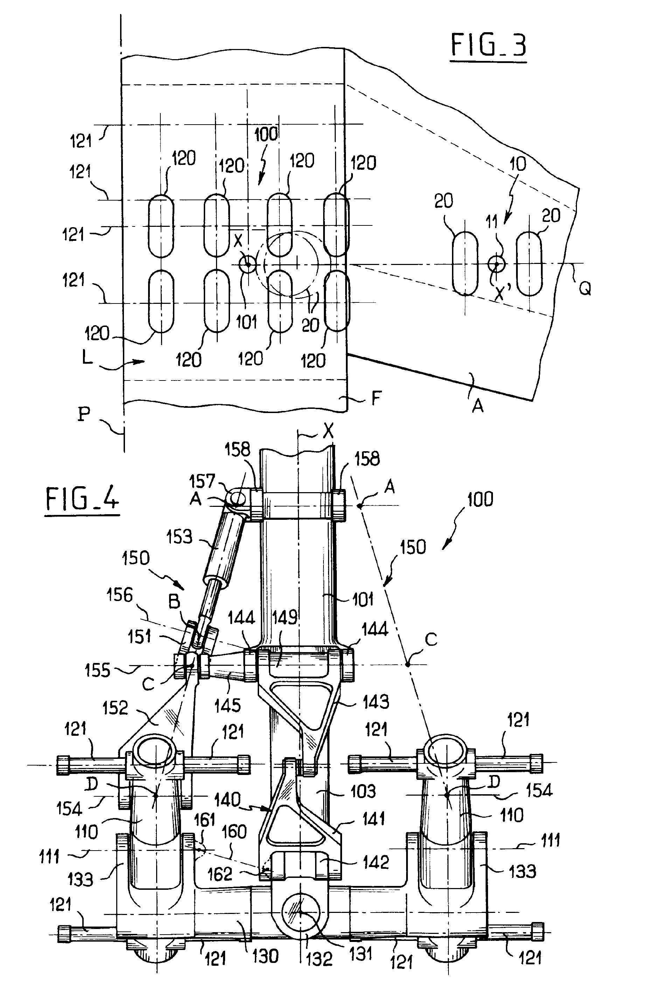

Sur la figure 2, on a noté Q le plan transversal (c'est-à-dire perpendiculaire au plan P précité) dans lequel reste l'axe du train de voilure 10, et il est intéressant de noter qu'en position train bas, le caisson 101 du train de fuselage 100 a son axe qui est situé dans ce plan Q. Cet agencement est mieux visible sur la vue partielle de dessus de la figure 3, vue qui permet de distinguer les huit roues 120 du train de fuselage 100 situé d'un côté du plan longitudinal médian P, et les roues 20 du train de voiture 10, ici au nombre de deux, situées du même côté.

Un tel agencement permet ainsi d'avoir une bonne répartition des charges, notamment des charges latérales (l'avion est en effet équipé de 20 roues), tout en concentrant le maximum de roues sur les atterrisseurs les plus courts (c'est-à-dire les atterrisseurs de fuselage). De plus, le fait de n'avoir que deux rangées de roues pour chaque train de fuselage procure une manoeuvrabilité très satisfaisante au sol, sans qu'il soit nécessaire de prévoir u quelconque système annexe d'orientation, et la disposition du train de voilure qui complète ici chaque train de fuselage, avec un calage dans le plan Q en position train bas, ne vient aucunement altérer cette manoeuvrabilité. Dans la pratique, on fera en sorte que la distance relative des axes X, X' des caissons 101 et 11, en position train bas, limite autant que faire se peut les angles de roulis en virage, cette distance devant en outre être suffisante pour qu'il n'y ait pas d'interférence possible en cours de relevage sans séquence relative entre les trajectoires des roues.

Sur la figure 3, on a schématisé par 121 les deux axes des roues 120, pour la position train haut dans laquelle le train 100 est logé dans son logement L associé, les deux roues 20 du train de voilure, logées juste derrière le train de fuselage, étant quant à elles schématisées en traits mixtes (le train de voilure pourrait être équipé de plus de deux roues, mais cela induirait un allongement du logement). Outre la compacité du logement L, le fait de prévoir un relevage du train de fuselage qui s'effectue longitudinalement vers l'avant constitue un avantage supplémentaire, dans la mesure où les effets aérodynamiques favorisent la descente de ce train. De plus, la position de l'axe d'articulation 102 du caisson 101 en bas de fuselage favorise une bonne reprise des efforts longitudinaux.

Sur les figures 1 et 2, on a représenté les roues 20 et 120 en contact avec le sol S, et on a représenté schématiquement en traits mixtes la position de ces mêmes roues en position détendue. Ainsi que cela est visible sur la figure 2, les bogies 110 associées aux roues 120 du train de fuselage sont en position inclinée avant le contact avec le sol. Pour plus de clarté, on n'a pas représenté sur la figure 2 le vérin de manoeuvre assurant le pivotement du caisson d'amortisseur 101 autour de son axe 102, tant pour le relevage que pour la descente du train, lequel vérin s'accroche sur un appendice associé du caisson.

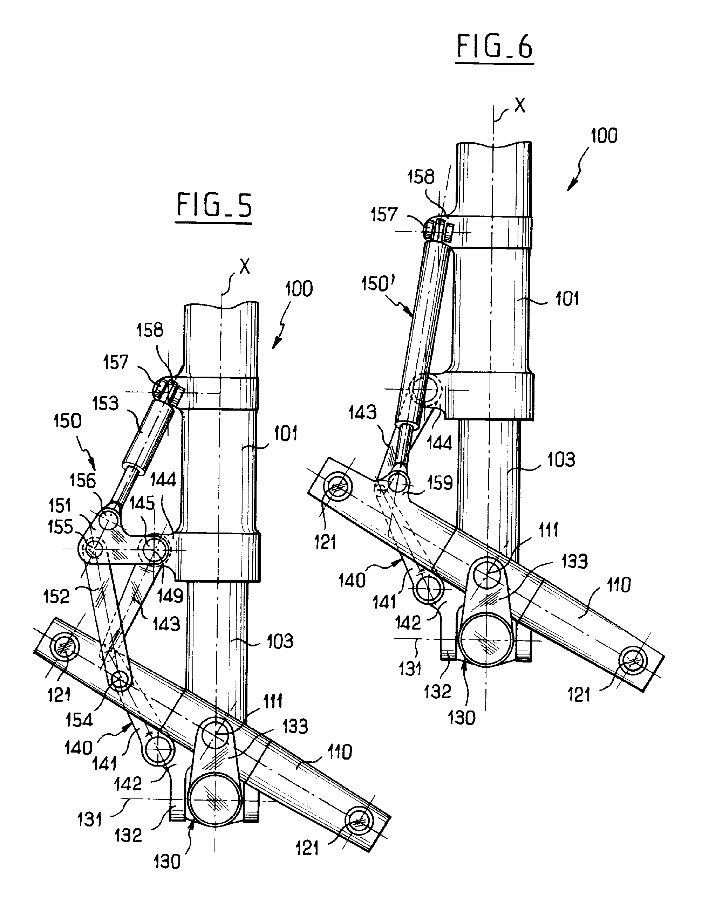

On va maintenant décrire plus en détail un mode de réalisation particulier du train 100, en se référant aux figures 4 et 5.

On distingue sur ces figures le caisson d'amortisseur 101 dont l'axe est noté X, ainsi que la tige d'amortisseur 103 coulissant dans ce caisson. Un compas 140 est prévu, de manière conventionnelle, entre le caisson d'amortisseur et sa tige coulissante: une chape 142 est donc prévue en extrémité inférieure de la tige coulissante 103, pour l'articulation du bras inférieur 141 du compas, et le bras supérieur 143 dudit compas étant quant à lui articulé selon un axe 149 sur une chape associée 144 qui est solidaire du caisson d'amortisseur 101.

En extrémité inférieure de la tige d'amortisseur 103 est prévue une chape 132 associée au montage articulé de la poutre principale 130. La poutre principale 130 s'étend ainsi de part et d'autre du plan défini par cet axe central d'articulation 131 et l'axe X de la tige coulissante, lequel plan constitue un plan vertical médian du train 100, et en outre ici un plan de symétrie pour les composants de celui-ci. La poutre 130 est donc agencée transversalement, contrairement aux agencements des trains d'atterrissage connus mentionnés plus haut. En l'espèce, compte tenu de l'orientation de l'axe 102 du caisson 101 du train d'atterrissage, lequel axe est perpendiculaire au plan longitudinal médian P, la poutre principale 130 reste essentiellement transversale, aussi bien en position train haut que train bas, et l'axe 131 reste donc parallèle au plan longitudinal médian P de l'avion. La poutre principale 130 supporte, à chacune de ses extrémités, par une chape associée 133, une poutre longitudinale articulée 110, l'axe d'articulation 111 de chaque poutre longitudinale passant au milieu de ladite poutre. Chaque poutre longitudinale 110 est ainsi montée pour pivoter autour d'un axe respectif 111 qui est perpendiculaire au plan médian P précité. De plus, chaque poutre longitudinale 110 est équipée à chaque extrémité d'une paire de roues (dont on ne distingue que les essieux correspondants 121 sur les figures 4 et 5) de façon à constituer un bogie basculant à quatre roues.

On a illustré en traits mixtes, de façon purement schématique, la présence possible d'un amortisseur de roulis 160, reliant la poutre principale 130, ici par l'une des chapes d'extrémité 133 équipée d'un appendice associé 161, à la tige coulissante 103 (parun appendice associé 162) : un tel amortisseur de roulis pourra être prévu de l'un ou des deux côtés de l'axe X, cet amortisseur pouvant naturellement être à contrôle actif ou adaptatif. De préférence, un tel amortisseur de roulis sera prévu du côté intérieur de l'atterrisseur (à gauche sur la figure 4 qui représente l'atterrisseur principal gauche) de façon à avoir tendance à surcharger les roues intérieures de cet atterrisseur, cette surcharge étant en fait compensée en virage par l'effet des efforts latéraux dirigés vers l'intérieur.

Il est intéressant de noter que l'axe central d'articulation 131 de la poutre principale 130 est ici surbaissé par rapport aux axes d'articulation 111 des poutres longitudinales associées 110. Un tel agencement permet de mini miser la surcharge des pneus extérieurs des roues 120 lors d'un virage au sol.

Sur les figures 4 et 5, on a représenté à titre d'exemple un mode d'exécution possible du moyen longitudinal de stabilisation associé à chaque poutre longitudinale 110 du train d'atterrissage 100. L'un des moyens longitudinaux de stabilisation 150 qui est illustré ici (l'autre moyen n'est schématisé que par une ligne en traits mixtes, sachant que leur structure est identique, et que leur agencement respecte une symétrie par rapport au plan défini par l'axe central d'articulation 131 de la poutre principale 130 et l'axe X de la tige coulissante). Le moyen longitudinal de stabilisation 150 se présente ainsi sous la forme d'un système articulé comportant une bielle 151 articulée sur le caisson d'amortisseur 101 par un prolongement 145 de l'axe 149 par lequel le bras supérieur 143 du compas est articulé au caisson 101, un panneau 152 articulé sur cette bielle et sur la poutre longitudinale 110 associée, et un amortisseur de tangage 153 également articulé sur ladite bielle et articulé au caisson 101 par une liaison à rotule. La réalisation de l'élément 152 sous la forme d'un panneau, qui est articulé selon un axe 154 sur la poutre longitudinale associée 110, permet d'assurer la stabilité latérale de l'ensemble, ledit panneau étant en outre articulé selon un axe 155 sur la bielle 151. L'amortisseur de tangage 153, qui est en butée détendue à l'atterrissage, est rotulé sur le caisson 101 (on distingue la chape de rotule 157 montée sur un appendice associé 158 du caisson), tandis que la tige de l'amortisseur est articulée selon un axe 156 sur la bielle 151. La figure 4 permet de mieux distinguer l'inclinaison relative des axes 155 et 156 précités. La bielle 151 est ici articulée en extrémité d'un prolongement 145 qui est associé à la chape 144 servant à l'articulation du bras supérieur 143 du compas 140. Les deux bielles 151 faisant partie des systèmes articulés sont ainsi montées pour tourner autour d'un axe commun 155 qui se confond avec l'axe d'articulation 149.

Ainsi que cela est visible sur la figure 4, chaque système articulé 150 est agencé de telle façon qu'en position détendue de l'amortisseur de tangage 153, les différentes articulations de ce système soient disposées en alignement en vue frontale. On a représenté les points remarquables des articulations concernées par les lettres A, B, C, D. Un tel agencement est naturellement favorable dans la mesure où il permet d'éviter des efforts de torsion parasites exercés sur la poutre longitudinale 110.

On a illustré sur la figure 6 un autre mode d'exécution possible du moyen longitudinal de stabilisation associé à chaque poutre longitudinale 110. Dans ce mode d'exécution, le moyen longitudinal de stabilisation est constitué par un amortisseur de tangage 150' reliant alors directement le caisson 101 (ici par une articulation rotulée 157 analogue à la précédente) à la poutre longitudinale associée 110 (par un appendice 159 de celle-ci). Le train d'atterrissage 100 comporte dans ce cas un amortisseur de tangage 150' de part et d'autre de son plan de symétrie défini par l'axe X du caisson et l'axe d'articulation 131 de la poutre principale 130. On obtient ainsi, avec une structure particulièrement simple, un contrôle satisfaisant des mouvements annexes lors du roulage de l'avion.

On est ainsi parvenu à réaliser un train d'atterrissage qui est à la fois court (pour ses atterrisseurs de fuselage) et permet d'avoir un nombre élevé de roues, procurant une bonne répartition des charges, notamment des charges latérales, tout en présentant une tolérance satisfaisante au regard des irrégularités du sol, et en permettant une manoeuvrabilité et une stabilité satisfaisantes de l'avion au roulage sur piste, notamment en virage. Le logement de réception associé peut alors être particulièrement court, même lorsqu'un train latéral de voilure vient compléter chaque train de fuselage, ce qui favorise le volume disponible pour le fret.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Train d'atterrissage relevable, comportant un atterrisseur constitué d'un caisson d'amortisseur équipé d'un axe d'articulation à une structure d'avion, et d'une tige d'amortisseur coulissant dans ledit caisson en extrémité de laquelle est articulée une poutre principale équipée de plusieurs paires de roues, caractérisé en ce que la poutre principale (130) est agencée transversalement, en pouvant pivoter autour d'un axe central d'articulation (131) qui définit avec l'axe de la tige coulissante un plan qui, au moins en position train bas, est parallèle à un plan longitudinal médian (P) de l'avion, et supporte à chacune de ses extrémités une poutre longitudinale articulée (110) montée pour pivoter autour d'un axe respectif (111) qui est perpendiculaire au plan médian (P) précité, chaque poutre longitudinale (110) étant équipée à chaque extrémité d'une paire de roues de façon à constituer un bogie basculant à quatre roues, et étant reliée au caisson d'amortisseur(101) par un moyen longitudinal de stabilisation associé (150 ; 150') qui est agencé longitudinalement.

2. Train d'atterrissage selon la revendication 1, caractérisé en ce que l'axe central d'articulation (131) de la poutre principale (130) est surbaissé par rapport aux axes d'articulation (111) des poutres longitudinales associées (110).

3. Train d'atterrissage selon la revendication 1 ou la revendication 2, caractérisé en ce que les deux moyens longitudinaux de stabilisation (150 ; 150') présentent des structures identiques, et sont agencés symétriquement de part et d'autre du plan défini par l'axe central d'articulation (131) de la poutre principale (130) et l'axe (X) de la tige coulissante.

4. Train d'atterrissage selon l'une des revendications 1 à 3, caractérisé en ce que le moyen longitudinal de stabilisation associé à chaque poutre longitudinale (110) est constitué par un système articulé (150) comportant une bielle (151) articulée sur le caisson d'amortisseur, un panneau (152) articulé sur ladite bielle et sur la poutre longitudinale associée, et un amortisseur de tangage (153) également articulé sur cette bielle et articulé audit caisson par une liaison à rotule.

5. Train d'atterrissage selon la revendication 4, comportant en outre un compas (140) à deux bras articulés (141, 143) reliant le caisson d'amortisseur à la tige coulissante de celui-ci, caractérisé en ce que les deux bielles (151) faisant partie des systèmes articulés (150) sont montées pour tourner autour d'un axe commun (155) qui est coaxial à l'axe d'articulation (149) par lequel le bras supérieur (143) du compas est articulé audit caisson.

6. Train d'atterrissage selon la revendication 4 ou la revendication 5, caractérisé en ce que chaque système articulé (150) est agencé de telle façon qu'en position détendue de l'amortisseur associé, les différentes articulations de ce système sont disposées en alignement en vue frontale.

7. Train d'atterrissage selon l'une des revendications 1 à 3, caractérisé en ce que le moyen longitudinal de stabilisation associé à chaque poutre longitudinale (110) est constitué par un amortisseur de tangage (150') reliant directement le caisson à la poutre longitudinale associée.

8. Train d'atterrissage selon l'une des revendications 1 à 7, caractérisé en ce qu'il comporte en outre au moins un amortisseurde roulis (160) reliant la tige coulissante d'amortisseur (103) à la poutre principale (130), par exemple par l'une ou l'autre des chapes d'extrémité (133) de ladite poutre principale qui sont associées à l'articulation des poutres longitudinales (110).

9. Train d'atterrissage selon l'une des revendications 1 à 8, caractérisé en ce que l'axe d'articulation (102) du caisson d'amortisseur (101) à la structure d'avion est perpendiculaire au plan longitudinal médian (P) de l'avion, et cet axe est agencé en partie basse du logement de réception (L) dudit train, de telle façon que le relevage s'effectue longitudinalement vers l'avant.

10. Train d'atterrissage selon l'une des revendications 1 à 9, caractérisé en ce que l'atterrisseur précité (100) est agencé pour être un atterrisseur de fuselage, et cet atterrisseur est complété par un atterrisseur relevable de voilure (10) agencé latéralement par rapport audit atterrisseur de fuselage.

11. Train d'atterrissage selon la revendication 10, caractérisé en ce que l'atterrisseur latéral de voilure (10) comporte un caisson d'amortisseur (11) monté pour pivoter dans un plan transversal (Q) perpendiculaire au plan médian (P) de l'avion, de telle façon que le relevage de cet atterrisseur s'effectue transversalement vers l'atterrisseur de fuselage associé (100).

12. Train d'atterrissage selon la revendication 11, caractérisé en ce que le plan transversal (Q) précité passe par l'axe (X) de la tige coulissante de l'atterrisseur de fuselage (100) lorsque celui-ci est en position train bas.

13. Train d'atterrissage selon la revendication 11 ou la revendication 12, caractérisé en ce que l'atterrisseur latéral de voilure (10) est équipé d'une unique paire de roues (20), et l'essieu de ces roues est calé sur le plan transversal (Q) précité.
